# EUROPEAN PATENT SPECIFICATION

(11) **EP 1 938 886 B1**
(45) Date of publication and mention of the grant of the patent: **14.11.2012**
(21) Application number: 07025170.7
(22) Date of filing: 28.12.2007
(51) Int. Cl.: B01D 53/84

(54) **Biological procedure for H2S removal from a gas**
Biologisches Verfahren zur Entfernung von H2S aus einem Gas
Procédure biologique pour l'élimination de l'H2S d'un gaz

(30) Priority: 29.12.2006 ES 200603313
(43) Date of publication of application: 02.07.2008
(73) Proprietor: Casals Cardona Industrial, S.A., 08243 Manresa Barcelona (ES)
(72) Inventor: Casals Perramon, Pere, 08243 Manresa, Barcelona (ES); Lafuente Sancho, Francisco Javier, 08243 Manresa, Barcelona (ES); Buguña, David Gabriel, 08243 Manresa, Barcelona (ES); Ortega Perez, Carlos, 08243 Manresa, Barcelona (ES); Gamisans Noguerra, Javier, 08243 Manresa, Barcelona (ES)
(74) Representative: Barroso Sánchez-Lafuente, Ignacio M.

(56) References cited:
- DE-A1- 4 316 936
- DE-A1- 4 437 842
- DE-A1-102004 027 442
- DE-C1- 10 003 171
- GB-A- 2 262 457
- US-A- 5 232 676
- US-A- 6 069 004
- US-A1- 2007 180 802
- US-B1- 6 168 711

## Description

### Technical field of the invention

The present invention relates to a biological procedure for the removal of H₂S (desulphuration) from a contaminating gas stream that contains it, particularly although not exclusively, a biogas derived from different processes, through the production of a liquid that includes an oxidized state of S, such as sulphur salts or elemental sulphur.

### Background of the invention

In the environmental sector, certain types of purification procedures such as, for example, urban solid waste treatment or deposition, are known to produce biogas in the form of a by-product that can be used as a fuel with characteristics similar to that of natural gas, usable, for example, in thermal combustion engines.

The use of this biogas is highly limited by the presence of sulphur in its reduced state, particularly hydrogen sulphide (H₂S) or hydrosulphuric acid. These condition the usability of the fuel (basically methane) generated in organic matter degradation processes, as its highly acidic nature affects combustion engines.

On the other hand, other high-energy gases such as natural gas, essentially comprised of methane, also contain high quantities of H₂S and other reduced sulphur compounds, which also entail similar problems to those explained in the case of biogas. Therefore, the removal of H₂S from these gases is necessary, for which several techniques and methods currently exist.

For example, EP 0 547 400 describes a chemical procedure for the removal of H₂S (desulphuration) from gases, by means of potassium hydroxide solutions with different degrees of regeneration. This is achieved by desulphuring low-pressure gas at a pressure margin of 0.9 to 1.2 bar in two steps, until a residual H₂S content of 0.1 to 0.5 H₂S/m³ of gas is reached, and by desulphuring high-pressure gas at a pressure margin of 2 to 25 bar, using a potassium hydroxide and sodium hydroxide solution, until a residual H₂S content of < 2 mg/m³ of gas is reached, due to which the potassium hydroxide solutions, charged as a result of the low-pressure and/or high-pressure lavages, undergo joint regeneration.

Nevertheless, such desulphuration techniques, currently used for H₂S removal, entail a high consumption of reactives (chemical systems), in addition to significant technical difficulties, due to the presence of other chemical species (v.g. carbonatation resulting from high CO₂ levels).

Biological processes are a good alternative to traditional chemical system desulphuration methods or techniques due to their significant advantages, such as, for example, high removal effectiveness and lower installation and maintenance costs.

WO 91/19558 describes a procedure for the removal of hydrogen sulphide (H₂S) from biogas, wherein the biogas is treated with an alkaline lavage liquid by means of absorption or scrubbing. The alkalinity required is generated in an wastewater aerobic biological treatment plant. The water/biomass mixture originating from the aerobic biological treatment of the clarified effluent is used as the absorption liquid. The liquid in which the H₂S is absorbed is recirculated to the aerobic phase for oxidation of H₂S.

As the closest prior art, document US-A-5 232 676 must be cited, which describes a procedure according to the preamble of claim 1.

### Explanation of the invention

The object of the present invention is to provide a biological procedure for removal of H₂S from a gas stream, which does not require treatment of the H₂S with alkaline liquid, thereby being applicable to gases that are not necessarily derived from aerobic biological treatments, a limitation which is an inconvenience of WO 91/19558.

Therefore, the object of the present invention is to provide a new desulphuration procedure according to claim 1.

Preferably, the phase in uniflow shall be comprised of two consecutive stages of oxidation reaction within the corresponding biological supports, whereby the contaminating gas flows in through the upper part of the first biological support, and a fractional oxidation of H₂S takes place in each phase.

In this case, liquid is refed to both stages of oxidation reaction, specifically to the upper part of the biological filling of each stage.

The refed liquid shall preferably be mixed with the mineral nutrient medium for the biological support.

The phase in counterflow shall preferably be comprised of two consecutive stages of oxidation reaction, with their two respective recirculated fluid and nutrient spray rings in the upper part of the biological support of each stage.

According to another characteristic of the present invention, a base is introduced into the upper part of the biological microorganism supports of each stage.

Preferably, the base shall previously be mixed with the recirculated liquid. Said base shall preferably, although not limitatively, be Na(OH).

Together with the recirculated liquid, air may be insufflated into the upper part of at least one of the oxidation reaction stages, in order to control the addition of O₂ so as to regulate the proportion of sulphur salts/elemental sulphur in the liquid produced.

According to another characteristic, muds originating from the wastewater biological purification treatment may be inoculated into the biological support.

The operating pH may be controlled, preferably by means of the constant addition of water to the biological reactor in a regulated manner.

In addition to the described advantages, which solve the inconveniences of the current state-of-the-art, the procedure of the invention increases the security of the operation by exhaustively controlling the addition of air.

### Brief description of the drawings

The attached drawings illustrate, embodiments of the procedure wherein:
- Fig. 1: shows a schematic view of a first embodiment of the procedure, in which a biological reactor is applied in a single phase comprised of two stages of liquid and gaseous flow in uniflow;
- Fig. 2: shows a schematic view, analogous to that of Fig. 1, of an embodiment according to the present invention, in which the bioreactor is applied in two phases, a first phase of liquid and gaseous flow in counterflow, and a second phase in uniflow, each phase being comprised of two stages.

### Detailed description of the drawings

Said drawings illustrate the operating method of the procedure of the present invention, in addition to that of reactors (1, 101) (also known as "percolating biofilter reactors") for putting it into practice. The procedure consists of the removal of hydrogen sulphide (H₂S) from a contaminating gas stream (GC) that contains it, such as biogas or synthetic gas, through the production of a liquid (L) containing an oxidized state of S, such as sulphur salts or elemental sulphur. According to the invention, the oxidation is a biological oxidation that takes place in different biological supports or biofilters (3, 3', 103, 103'), formed by a large specific surface area material or filling (4, 4', 104, 104'), with microorganisms fed by nutrients at different levels, and the contaminating gas (GC) in counterflow or uniflow with the liquid produced (L).

In both figures, which illustrate the two examples of embodiment the liquid (L) and contaminating gas (GC) flows are represented with arrows, continuous in the case of liquid (L) flow and dashed in the case of contaminating gas (GC) flow. In both forms of embodiment, the number of stages in each phase may be varied in accordance with operating conditions.

Biological oxidation of hydrogen sulphide is produced through the addition of oxygen, which acts as an electron accepter, and the use of S²⁻ by said microorganisms, as a source of electrons. The amount of O₂ present in the liquid phase (L) (reactive medium) determines whether the process produces protons (total oxidation to SO₄⁼) or elemental sulphur.

2H₂S + O₂ → 2S + 2H₂O (O₂ : H₂S = 0.5) (1)

H₂S + 2O₂ → H₂SO₄ (O₂ : H₂S = 2.0) (2)

Sulphuric acid (H₂SO₄) evolves towards sulphate salt (of the base inoculated into the system) when the oxygen concentration in the liquid is under non-limiting conditions (reaction 2) and the hydrogen sulphide produces mainly sulphate, which is removed from the system by the purge flow (7). If the oxygen is under limiting conditions (reaction 1), the hydrogen sulphide is oxidized at most to S, remaining adhered to the filling (4, 4', 104 or 104'), with the consequent risk of contamination.

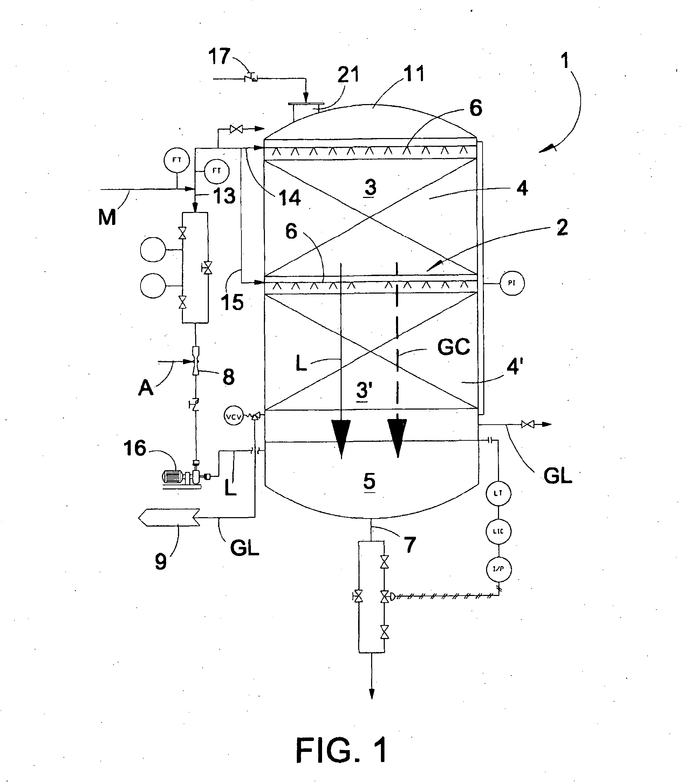

In Fig. 1 we can observe that the reactor (1) is both a contaminating gas (GC) and liquid (L) reactor with descending flow, although in some cases the contaminating gas flow may be ascending, in which a uniflow relationship between the gas and liquid is established through a phase in uniflow (2) formed by two stages of biofilter (3 and 3') with the corresponding filling (4 and 4'). The liquid (L) phase is constantly recirculated from the upper part of the decantation area (5) to the fillings (4 and 4') via ducts (13, 14, 15) and impelled by pumping means (16) towards two levels of showers (6 and 6') that spray the recirculated liquid. The contaminating gas (GC) is introduced, in descending flow, through an inlet (21) in the upper part of the bioreactor (1) dome (11). The showers (6 and 6') spray the liquid (L) in a steady flow, which may vary from trickling to high-pressure jet streams. These showers (6, 6') are also known as "ring spargers" in the art.

The first shower (6) is disposed in the upper part of the reactor (1), and the second shower (6') is disposed approximately halfway up the reactor (1). At the same time, the liquid phase is renewed through the addition of the mineral medium (M). A lower purge (7) from the bottom of the decantation area (5), tilted (bottom), completes the bioreactor (1).

Oxygen is added during the liquid (L) phase, whereby air (A) is fed via an ejector (8). In this manner, the liquid (L) phase flows into the biofilters (3 and 3') together with dissolved air and air bubbles via the upper part and halfway up the reactor (1). In the upper part of the reactor (1), during the first stage (3), the concentration of hydrogen sulphide and oxygen is higher, both in the gas phase and liquid phase, than in the second stage (3') of the lower part of the reactor (1). Additionally, the contaminating gas (GC) of the phase in uniflow (2) is increasingly purified and less rich in hydrogen sulphide as it descends and reacts with the liquid (L).

The clean gas (GL) exits through the lower part of the reactor (1), above the decantation area (5).

In terms of liquid flow, the second stage (3') receives the sum of the flow from the first shower (6) and the flow from the second shower (6'). Although this transports the S away, it also reduces the filling mass, which may negatively affect contaminant removal effectiveness.

Additionally, gas (GC) circulation speed shall be relatively low, due to the pass-through section, due to which transfer of the oxygen, contaminant and carbon source of the of gas-to-liquid phase shall be lower than in the case of a smaller pass-through area.

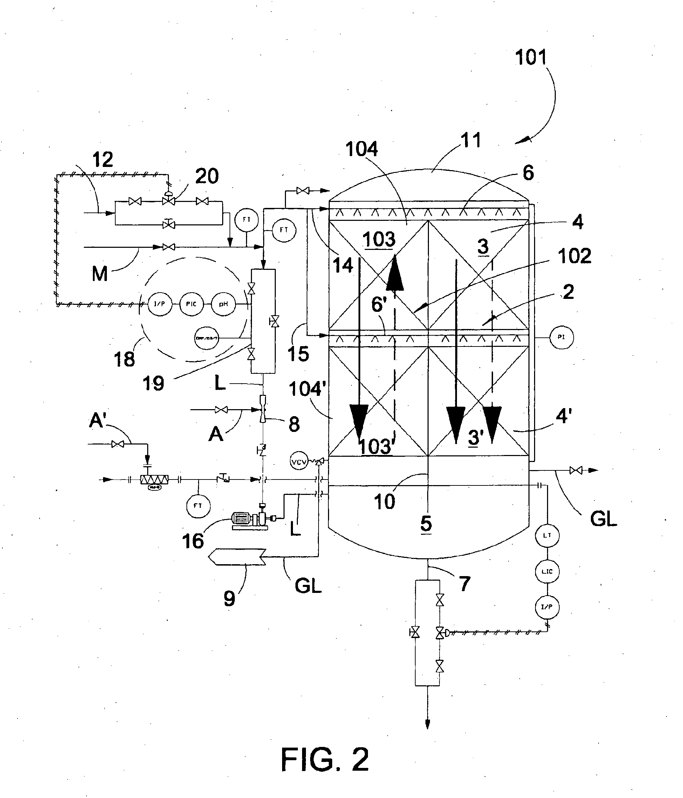

In order to solve these inconveniences, a second form of embodiment according to the present invention, shown in Fig. 2, has been envisaged, in which the reactor (101) has design variants.

In this case, the reactor (101) is a two-phase bioreactor, comprised of a first phase of liquid and gas flow in counterflow (102) and a second phase in uniflow (2), each phase consisting of two stages (3, 3' and 103, 103') and having two levels of showers (6 and 6').

A partitioning wall (10) separates the first phase (102) from the second phase (2), leaving an open space in the upper part of the dome (11). In this manner, the gas (GC) flows upwards during the first phase (102) and downwards during the second phase (2), which it accesses after changing direction in the reactor (101) dome (11).

This two-phase (or "double-step") design allows the pass-through area to be smaller for the same reactor (101) volume. For this reason, gas circulation speed increases, thereby improving matter transfer from the gas (GC) to the liquid (L). The availability of substrate for the microorganism is improved. That is, the two-phase design allows the use of a reactor (101) of smaller overall size (total diameter and/or height) than the single-phase reactor (1) in uniflow, for the same desulphuration capacity.

Two levels of showers (6 and 6') (also called "ring spargers") are disposed at each biofilter (3, 3' and 103, 103') level or stage, with their respective fillings (4, 4', 104, 104'). In the first biofiltering stage (103'), the concentration of contaminant is higher and gradually descends as the GC flow passes through the biofilters (103, 3 and 3'), in that order. The first shower (6') of the first step (102) is very positive, both for transport of S and transfer of O₂. Use of the recirculation liquid (L) in the first phase (102) and in the upper part of the second phase (2) is more effective in terms of optimizing oxygen use.

Fig. 2 shows the addition of a base (12) which is introduced previously mixed with the recirculation liquid (L) in the ring sparger (6 and 6') for the purpose of regulating the pH and the percentage production of the different oxidized states of S, i.e. salts or elemental S. Said base may be Na(OH), in which case the salts produced shall be, for example, sulphates and sodium sulphates. Another akali may be used instead of Na(OH).

Air is insufflated (A, A') together with the recirculated liquid (L) in order to control the addition of O₂ so as to regulate the proportion of sulphur salts/elemental sulphur in the liquid (L) produced.

In order to improve the dynamics of the process, muds originating from the wastewater purification biological treatment may be added to the biological supports of the biofilters (3, 3', 103 and/or 103'), for example by means of inoculation.

Water may be added to the reactor (1) or (101) in a constant and regulated manner in order to help control the pH of the operation.

The instrumentation diagrams of Figs. 1 and 2 illustrate an indicative example of possible and adequate control to follow up the execution of the desulphuration procedure of the invention: the contaminating gas (GC) is mixed with air (A), A'), with variable and controlled degrees of oxygen enrichment, and flow is measured. Air flow (A, A') shall be regulated through the concentration of H₂S contaminant entering the system, which is regularly measured.

Prior to the entrance of contaminant gas (GC) into the reactor, an anti-return valve (17) is disposed to prevent the gas (GC) from returning to the system in the event that reactor (1, 101) pressure increases.

The gas exiting the reactor (1, 101) may be directed either to security torches (9) that complement the installation or to a system for exploiting the energy content of the gas, for example in a thermoelectric cogeneration system.

Fig. 2 illustrates a set of probes (18) that measure the pH, dissolved oxygen, potential redox and temperature of the recirculation liquid (L). The probes (18) are disposed in a by-pass (19) and actuate a valve (20) of the entrance duct of the base (12). Therefore, recirculated liquid (L) flow pH is controlled by adding the base.

The system may be provided with other necessary measurement, regulation and control elements, symbolized in the diagrams by means of circles and common valve symbols which, due to being well known, are not explained in further detail herein.

The generated solid, contained in the purification liquid (7) and which is fundamentally comprised of sulphur salt and the corresponding base, and/or elemental sulphur, is separated by means of a device attached to the reactor (1, 101). Said device may consist of a sleeve filter, a press filter or a centrifuge system.

Finally, the filling (4, 4', 104 and 104') material of the respective biofilters (3, 3', 103 and 103') may be either an open-cell filling or a more porous structure such as, for example, open-cell polyurethane foam.

## Claims

1. Procedure for the removal of hydrogen sulphur (H₂S) from a contaminating gas (GC) stream that contains it, whereby a liquid (L) that contains an oxidized state of S, such as sulphur salts or elemental sulphur, is produced, **characterized in that** it comprises:
the biological oxidation of H₂S by means of microorganisms disposed within a biological support or biofilters (3, 3', 103, 103'), in a biological reactor (101), by means of two phases: a first oxidation phase in counterflow (102), in biofilters (102, 103') with the gas in ascending flow and, downstream of the first phase with respect to the gas flow; and a second oxidation phase in uniflow (2), in biofilters (3, 3') with the gas in descending flow, said gas being introduced during the first phase (102) in ascending direction through the lower part of the reactor (101) and changed from ascending flow to descending flow in the upper part of the reactor, becoming mixed with the descending liquid (L) flow during the second phase in uniflow (2), with the liquid produced and the gas in uniflow (2) within said biological support;
the recirculation of part of said liquid (L) from a lower decantation area of the reactor (1, 101) towards the upper part of the biofilter, where the liquid is sprayed downwards over said biological support, and from which it is also fed a mineral nutrient medium for the microorganisms; and
the extraction of the clean gas (GL) through the lower part of the reactor (1, 101).

2. Procedure, according to claim 1, **characterized in that** the phase in uniflow (2) comprises two consecutive stages of oxidation reaction within the corresponding biological supports or biofilters (3, 3'), whereby the contaminating gas (GC) enters through the upper part of the first biofilter (3), and a fractional oxidation of H2S takes place in each phase.

3. Procedure, according to claim 2, **characterized in that** liquid (L) is refed to both oxidation reaction stages, specifically to the upper part of the biological filling or biofilter (3, 3') of each stage.

4. Procedure, according to claim 3, **characterized in that** the liquid (L) which is refed is mixed with the mineral nutrient medium (M) for the biological support.

5. Procedure, according to claim 1, **characterized in that** the phase in counterflow (102) is comprised of two consecutive stages of oxidation reaction, with two respective ring spargers (6, 6') that spray the recirculated and nutrient fluid disposed in the upper part of the biological support of each stage.

6. Procedure, according to any of the preceding claims, **characterized in that** it consists of introducing a base (12) into the upper part of the biological microorganism supports (3, 3', 103, 103') of each stage.

7. Procedure, according to claim 6, **characterized in that** the base (12) is previously mixed with the recirculated liquid (L).

8. Procedure, according to claim 6 or 7, **characterized in that** said base (12) is Na(OH) o other alkali.

9. Procedure, according to any of the preceding claims, **characterized in that** air (A, A') is insufflated together with the recirculated liquid (L) in the upper part of at least one of the oxidation reaction stages (2, 102), in order to control the addition of 02 so as to regulate the proportion of sulphur salts/elemental salts in the produced liquid (L).

10. Procedure, according to any of the preceding claims, **characterized in that** it consists of inoculating muds originating from the wastewater purification biological treatment into the biofilters (3, 3', 103, 103').

11. Procedure, according to any of the preceding claims, **characterized in that** it consists of controlling the pH of the operation.

12. Procedure, according to claim 11, **characterized in that** the pH is controlled by means of the constant addition of water to the biological reactor (1, 101) in a regulated manner.

## Patentansprüche

1. Verfahren zur Beseitigung von Wasserstoffsulfid (H₂S) aus einem es enthaltenden Strom kontaminierenden Gases (GC), wobei eine Flüssigkeit (L) erzeugt wird, die einen oxydierten Zustand von S, wie z.B. Schwefelsalze oder elementaren Schwefel, enthält, **dadurch gekennzeichnet, daß** es Folgendes umfaßt:
die biologische Oxydation von H₂S durch innerhalb eines biologischen Trägers oder Biofilter (3, 3', 103, 103') angeordnete Mikroorganismen, in einem biologischen Reaktor, durch zwei Phasen: eine erste Oxydationsphase in Gegenstrom (102) in Biofiltern (103, 103') mit dem aufströmenden Gas und stromabwärts der ersten Phase in bezug auf den Gasstrom; und eine zweite Oxydationsphase in Gleichstrom (2) in Biofiltern (3, 3') mit dem abströmenden Gas, wobei das obengenannte Gas während der ersten Phase (102) in aufsteigender Richtung durch den unteren Teil des Reaktors (101) eingeführt und seine Strömungsrichtung im oberen Teil des Reaktors von aufsteigender zu absteigender Richtung gewechselt wird, wobei es während der zweiten Phase in Gleichstrom (2) mit der abströmenden Flüssigkeit (L) gemischt wird, mit der erzeugten Flüssigkeit und dem Gas in Gleichstrom (2) innerhalb des obengenannten biologischen Trägers;
der Wiederumlauf eines Teils der obengenannten Flüssigkeit (L) von einem unteren Absetzbereich des Reaktors (1, 101) nach dem oberen Teil des Biofilters, wo die Flüssigkeit abwärts über dem obengenannten biologischen Träger gesprüht , und wovon sie auch mit einem mineralischen Nahrungsmittel für die Mikroorganismen versorgt wird; und
die Entnahme des gereinigten Gases (GL) durch den unteren Teil des Reaktors (1, 101).

2. Verfahren nach Anspruch 1, **dadurch gekennzeichnet, daß** die Phase in Gleichstrom (2) zwei einanderfolgenden Oxydationsreaktionsstufen innerhalb der entsprechenden biologischen Träger oder Biofilter (3, 3') umfaßt, wobei das kontaminierende Gas (GC) durch den oberen Teil des ersten Biofilters (3) einfließt, und eine teilweise Oxydation von H₂S in jeder Phase statt findet.

3. Verfahren nach Anspruch 2, **dadurch gekennzeichnet, daß** beide Oxydationsreaktionsstufen mit Flüssigkeit (L) wiederversorgt werden, wobei diese Flüssigkeitszufuhr besonders zum oberen Teil der biologischen Füllung oder des Biofilters (3, 3') jeder Stufe erfolgt.

4. Verfahren nach Anspruch 3, **dadurch gekennzeichnet, daß** die wiederzugeführte Flüssigkeit (L) mit dem mineralischen Nahrungsmittel (M) für den biologischen Träger versetzt wird.

5. Verfahren nach Anspruch 1, **dadurch gekennzeichnet, daß** die Phase in Gegenstrom (102) aus zwei einanderfolgenden Oxydationsreaktionsstufen besteht, mit zwei jeweiligen, ringförmigen Brauseköpfen (6, 6'), die die umgewälzte und ernährende, im oberen Teil des biologischen Trägers jeder Stufe angeordnete Flüssigkeit sprühen.

6. Verfahren nach irgendeinem der vorgehenden Ansprüche, **dadurch gekennzeichnet, daß** es die Einführung einer Base (12) in den oberen Teil der Träger (3, 3', 103, 103') der biologischen Mikroorganismen umfaßt.

7. Verfahren nach Anspruch 6, **dadurch gekennzeichnet, daß** die Base (12) zuerst mit der umgewälzten Flüssigkeit (L) versetzt wird.

8. Verfahren nach Anspruch 6 oder 7, **dadurch gekennzeichnet, daß** die obengenannte Base (12) Na(OH) oder ein anderes Alkali ist.

9. Verfahren nach irgendeinem der vorgehenden Ansprüche, **dadurch gekennzeichnet, daß** zwecks Kontrolle der O₂-Zugabe um das Verhältnis von Schwefelsalzen/elementaren Salzen in der erzeugten Flüssigkeit (L) zu regulieren im oberen Teil von mindestens einer der Oxydationsreaktionsstufen (2, 102) Luft (A, A') zusammen mit der umgewälzten Flüssigkeit (L) eingeblasen wird.

10. Verfahren nach irgendeinem der vorgehenden Ansprüche, **dadurch gekennzeichnet, daß** es die Inokulation von aus der biologischen Behandlung zur Abwasserreiningung stammenden Schlämmen in die Biofilter (3, 3', 103, 103') umfaßt.

11. Verfahren nach irgendeinem der vorgehenden Ansprüche, **dadurch gekennzeichnet, daß** es die Kontrolle des pH-Wertes des Vorgangs umfaßt.

12. Verfahren nach Anspruch 11, **dadurch gekennzeichnet, daß** der pH-Wert durch ständige, in geregelten Weise durchgeführte Wasserzugabe zum biologischen Reaktor (1, 101) kontrolliert wird.

## Revendications

1. Procédé pour l'élimination du sulfure d'hydrogène (H₂S) d'un courant de gaz contaminant (GC) qui le contient, par lequel est produit un liquide (L) qui contient un état oxydé de S, tel que des sels de soufre ou du soufre élémentaire, **caractérisé en ce qu'**il comprend :
l'oxydation biologique de H₂S au moyen de micro-organismes disposés dans un support biologique ou biofiltres (3, 3', 103, 103') dans un réacteur biologique (101), au moyen de deux phases : une première phase d'oxydation à contre-courant (102), dans des biofiltres (103, 103') avec le gaz en flux ascendant, et en aval de la première phase par rapport au flux gazeux ; et une deuxième phase d'oxydation en équi-courant (2), dans des biofiltres (3, 3') avec le gaz en flux descendant, ledit gaz étant introduit lors de la première phase (102) en direction ascendante à travers la partie inférieure du réacteur (101) et étant changé d'un flux ascendant à un flux descendant dans la partie supérieure du réacteur, se mélangeant avec le flux de liquide (L) descendant lors de la deuxième phase en équi-courant (2), avec le liquide produit et le gaz en équi-courant (2) dans ledit support biologique ;
la ré-circulation d'une partie dudit liquide (L) d'une aire de décantage inférieure du réacteur (1, 101) vers la partie supérieure du biofiltre, où le liquide est aspergé vers le bas sur ledit support biologique, et d'où il est aussi alimenté avec un moyen nourrissant minéral pour les micro-organismes ; et
l'extraction du gaz épuré (GL) par la partie inférieure du réacteur (1, 101).

2. Procédé, selon la revendication 1, **caractérisé en ce que** la phase en équi-courant (2) comprend deux étages consécutifs de réaction d'oxydation dans les correspondants supports biologiques ou biofiltres (3, 3'), où le gaz contaminant (GC) entre par la partie supérieure du premier biofiltre (3), et une oxydation fractionnaire de H₂S a lieu à chaque phase.

3. Procédé, selon la revendication 2, **caractérisé en ce que** le liquide (L) est réalimenté aux deux étages de réaction d'oxydation, spécialement à la partie supérieure du remplissage biologique ou biofiltre (3, 3') de chaque étage.

4. Procédé, selon la revendication 3, **caractérisé en ce que** le liquide (L) qui est réalimenté est mélangé avec le moyen nourrissant minéral (M) pour le support biologique.

5. Procédé, selon la revendication 1, **caractérisé en ce que** la phase en contre-courant (102) comprend deux étages consécutifs de réaction d'oxydation, avec deux respectifs arroseurs annulaires (6, 6') qui aspergent le fluide nutritif recirculé disposé dans la partie supérieure du support biologique de chaque étage.

6. Procédé, selon l'une quelconque des revendications précédentes, **caractérisé en ce qu'**il comprend l'introduction d'une base (12) dans la partie supérieure des supports (3, 3', 103, 103') des micro-organismes biologiques de chaque étage.

7. Procédé, selon la revendication 6, **caractérisé en ce que** la base (12) est préalablement mélangée avec le liquide recirculé (L).

8. Procédé, selon la revendication 6 ou 7, **caractérisé en ce que** ladite base (12) est Na(OH) ou un autre alcali.

9. Procédé, selon l'une quelconque des revendications précédentes, **caractérisé en ce que** de l'air (A, A') est insufflé conjointement avec le liquide recirculé (L) dans la partie supérieure d'au moins un des étages de réaction d'oxydation (2, 102) pour contrôler l'ajout de O₂ afin de réguler la proportion de sels de soufre / sels élémentaires dans le liquide (L) produit.

10. Procédé, selon l'une quelconque des revendications précédentes, **caractérisé en ce qu'**il comprend l'inoculation de boues originaires du traitement biologique d'épuration des eaux résiduaires dans les biofiltres (3, 3', 103, 103').

11. Procédé, selon l'une quelconque des revendications précédentes, **caractérisé en ce qu'**il comprend le contrôle du pH de l'opération.

12. Procédé, selon la revendication 11, **caractérisé en ce que** le pH est contrôlé au moyen de l'ajout constant d'eau au réacteur biologique (1, 101) de manière régulée.
